(19) Europäisches Patentamt
European Patent Office
Office européen des brevets

(11) **EP 3 943 634 A1**

(12) **EUROPEAN PATENT APPLICATION**
published in accordance with Art. 153(4) EPC

(43) Date of publication:
**26.01.2022 Bulletin 2022/04**

(21) Application number: **20773805.5**

(22) Date of filing: **19.03.2020**

(51) International Patent Classification (IPC):
***C22C 38/00*** *(2006.01)*      ***C22C 38/54*** *(2006.01)*
***C21D 6/00*** *(2006.01)*

(52) Cooperative Patent Classification (CPC):
**C22C 38/00; C22C 38/54;** C21D 6/00; Y02P 10/20

(86) International application number:
**PCT/JP2020/012528**

(87) International publication number:
**WO 2020/189789 (24.09.2020 Gazette 2020/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.03.2019 JP 2019051751
19.03.2019 JP 2019051752
11.04.2019 JP 2019075661**

(71) Applicant: **NIPPON STEEL CORPORATION
Chiyoda-ku
Tokyo 100-8071 (JP)**

(72) Inventors:
• **HIRATA, Hiroyuki
Tokyo 100-8071 (JP)**
• **YOSHIZAWA, Mitsuru
Tokyo 100-8071 (JP)**
• **HIGUCHI, Junichi
Tokyo 100-8071 (JP)**
• **TANAKA, Katsuki
Tokyo 100-8071 (JP)**

(74) Representative: **Vossius & Partner
Patentanwälte Rechtsanwälte mbB
Siebertstraße 3
81675 München (DE)**

(54) **FERRITIC HEAT-RESISTANT STEEL**

(57) A ferritic heat-resistant steel includes, by mass: from 0.06 to 0.11% of C; from 0.15 to 0.35% of Si; from 0.35 to 0.65% of Mn; from 0 to 0.02% of P; from 0 to 0.003% of S; from 0.005 to 0.25% of Ni; from 0.005 to 0.25% of Cu; from 2.7 to 3.3% of Co; from 8.3 to 9.7% of Cr; from 2.5 to 3.5% of W; from 0.15 to 0.25% of V; from 0.03 to 0.08% of Nb; from 0.002 to 0.04% of Ta; from 0.01 to 0.06% of Nd; from 0.006 to 0.016% of B; from 0.005 to 0.015% of N; from 0 to 0.02% of Al; and from 0 to 0.02% of O, with a balance consisting of Fe and impurities, and an amount of W, which is analyzed as an electrolytically extracted residue, $[\%W]_{ER}$, satisfying: $-10 \times [\%B] + 0.26 \le [\%W]_{ER} \le 10 \times [\%B] + 0.54$.

**EP 3 943 634 A1**

**Description**

Technical Field

The present disclosure relates to a ferritic heat-resistant steel.

Related Art

Due to ferritic heat-resistant steels being not only inexpensive compared to austenitic heat-resistant steels and Ni-based heat-resistant steels, but also having the advantage of being used as heat-resistant steels at high temperatures because of their low coefficient of thermal expansion, ferritic heat-resistant steels are widely utilized in equipment used at high temperatures, such as boilers for thermal power generation.

In recent years, there is an increasing trend for a higher temperature and a higher pressure in steam conditions in order to improve thermal efficiency in coal-fired power generation, and in the future, operations under ultra-supercritical conditions of 650 °C and 350 atm are planned. In order to deal with such increasingly harsh steam conditions, a number of ferritic heat-resistant steels in which creep strength is enhanced by actively incorporating W and B have been proposed.

For example, Patent Document 1 discloses a high-Cr ferritic heat-resistant steel having excellent long-term high temperature creep strength, the high-Cr ferritic heat-resistant steel including, by mass: from 0.001 to 0.15% of C; from 8 to 13% of Cr; from 0.2 to 0.5% of V; from 0.002 to 0.2% of Nb; from 2 to 5% of W; from 0.001 to 0.03% of N; and from 0.0001 to 0.01% of B, wherein a metallographic microstructure of the high-Cr ferritic heat-resistant steel consists of a tempered martensitic base and $M_{23}C_6$ having a grain size of 0.6 $\mu$m or less and an intermetallic compound are precipitated at a total of 0.4/$\mu$m$^3$ or more in the martensite lath.

Patent Document 2 discloses a high-Cr ferritic heat-resistant steel having excellent creep strength and creep ductility at a high temperature, the high-Cr ferritic heat-resistant steel including, by mass: from 0.05 to 0.15% of C; from 8 to 15% of Cr; from 0.05 to 0.5% of V; from 0.002 to 0.18% of Nb; from 0.1 to 5% of W; from 0.0001 to 0.02% of B; and from 0.0005 to 0.1% of N, wherein an amount of Nd in the high-Cr ferritic heat-resistant steel is determined from a content of S, P, Ca, and Mg.

Patent Document 3 discloses a high-Cr ferritic heat-resistant steel having excellent creep strength at a high temperature, the high-Cr ferritic heat-resistant steel including, by mass: from 0.01 to 0.13% of C; from 8.0 to 12.0% of Cr; from 1.0 to 4.0% of W; from 1.0 to 5.0% of Co; from 0.1 to 0.5% of V; from 0.01 to 0.10% of Nb; from 0.002 to 0.02% of B; from 0.005 to 0.020% of N; and from 0.005 to 0.050% of Nd, wherein among the MX precipitates present within the crystal grains, an average interparticle distance $\lambda$ of MX precipitates having a grain size of 20 nm or more is from 20 nm to 100 nm.

Further, Patent Document 4 discloses a welded joint having excellent creep strength which consists of a tempered martensitic heat-resistant steel, the tempered martensitic heat-resistant steel including, by weight, from 0.003 to 0.03% of B, and other alloy elements: from 0.03 to 0.15% of C; from 8.0 to 13.0% of Cr; from 0.1 to 2.0% of Mo + W/2; from 0.05 to 0.5% of V; 0.06% or less of N; from 0.01 to 0.2% of Nb; and from 0.01 to 0.2% of one of two or more of any of (Ta + Ti + Hf + Zr).

In addition, Patent Document 5 discloses a high-Cr ferritic heat-resistant steel that achieves both long-term creep strength and room-temperature toughness by including, by mass, from 0.01 to 0.18% of C, from 8 to 14% of Cr; from 0.05 to 1.8% of V, from 0.01 to 2.5% of Mo, from 0.02 to 5% of W, and from 0.001 to 0.1% of N, and setting a solid solution amount Vs of V in the matrix to Vs > 0.01/(C + N), and a method for producing a high-Cr ferritic heat-resistant steel in which normalizing and tempering that depend on a content of C and V are performed in order to obtain said high-Cr ferritic heat-resistant steel.

Further, Patent Document 6 discloses a method for producing a high-Cr ferritic heat-resistant steel that includes, by mass, from 0.05 to 0.12% of C, from 8.0 to less than 12% of Cr, from 0.15 to 0.25% of V, from 0.03 to 0.08% of Nb, from 0.005 to 0.07% of N, and one or both of from 0.1 to 1.1% of Mo and from 1.5 to 3.5% of W, the method defining conditions of the working processes.

Patent Document 7 discloses a single submerged arc welding method of a high-Cr CSEF (Creep Strength-Enhanced Ferritic), which includes using a combination of: a welding wire including less than 0.05% by mass of C, 0.055% by mass or less of N, more than 0.05% by mass and 0.50% by mass or less of Si, one or more elements selected from Mn, Ni, Cr, Mo, V, Nb, W, Co, and B, wherein a Mn content is 2.20% by mass or less, a Ni content is 1.00% by mass or less, a Cr content is 10.50% by mass or less, a Mo content is 1.20% by mass or less, a V content is 0.45% by mass or less, a Nb content is 0.080% by mass or less, a W content is 2.0% by mass or less, a Co content is 3.0% by mass or less, and a B content is 0.005% by mass or less, with the balance being Fe and inevitable impurities, and a welding flux including from 2 to 30% by mass of $CaF_2$, from 2 to 20% by mass of CaO, from 20 to 40% by mass of MgO, from 5 to 25% by mass of $Al_2O_3$, and from 5 to 25% by mass of Si and $SiO_2$ in total (in terms of $SiO_2$), and further including, in limited amounts, 25% by mass or less of BaO, 10% by mass or less of $ZrO_2$, and less than 5% by mass of $TiO_2$.

Patent Document 8 discloses a welding material for a ferritic heat-resistant steel, the material having a chemical composition containing, by mass: from 0.06 to 0.10% of C; from 0.1 to 0.4% of Si; from 0.3 to 0.7% of Mn; 0.01% or less of P; 0.003% or less of S; from 2.6 to 3.4% of Co; from 0.01 to 1.10% of Ni; from 8.5 to 9.5% of Cr; from 2.5 to 3.5% of W; less than 0.01% of Mo; from 0.02 to 0.08% of Nb; from 0.1 to 0.3% of V; from 0.02 to 0.08% of Ta; from 0.007 to 0.015% of B; from 0.005 to 0.020% of N; 0.03% or less of Al; 0.02% or less of O; from 0 to 1% of Cu; from 0 to 0.3% of Ti; from 0 to 0.05% of Ca; from 0 to 0.05% of Mg, and from 0 to 0.1% of rare earth metals, with the balance being Fe and impurities, and satisfying Formula (1),

$0.5 \leq$ Cr + 6 Si + 1.5 W + 11 V + 5 Nb + 10 B - 40 C - 30 N - 4 Ni - 2 Co - 2 Mn$\leq 10.0$ (1) wherein symbols of elements in Formula (1) are to be substituted by contents of corresponding elements (in % by mass).

Prior Art Documents

Patent Documents

Patent Document 1: Japanese Patent Application Laid-Open (JP-A) No. 2002-241903
Patent Document 2: Japanese Patent Application Laid-Open (JP-A) No. 2002-363709
Patent Document 3: Japanese Patent Application Laid-Open (JP-A) No. 2016-216815
Patent Document 4: Japanese Patent Application Laid-Open (JP-A) No. 2004-300532
Patent Document 5: Japanese Patent Application Laid-Open (JP-A) No. 2001-192781
Patent Document 6: Japanese Patent Application Laid-Open (JP-A) No. 2009-293063
Patent Document 7: Japanese Patent Application Laid-Open (JP-A) No. 2016-22501
Patent Document 8: International Publication (WO) No. 2017/104815

SUMMARY OF INVENTION

Problem to be Solved by the Invention

Ferritic heat-resistant steels are required to have not only a sufficient creep strength during use at a high temperature (for example, during the operation of a boiler for power generation, in which a ferritic heat-resistant steel is used), but also sufficient mechanical performance, that is, sufficient tensile properties and impact properties (toughness), in order to ensure soundness as a structure before being used at a high temperature (for example, during the process of assembling the above-described boiler before the start of the operation thereof). Although the above-mentioned ferritic heat-resistant steels have excellent creep strength, it has been found that there are cases in which the above-mentioned ferritic heat-resistant steels fail to stably provide the above-described mechanical performance. In particular, when ferritic heat-resistant steel contains a large amount of W and 0.006% or more of B for the purpose of obtaining higher creep strength, there are cases in which sufficient tensile strength and toughness may not be obtained.

The present disclosure has been made in view of the current circumstances described above, and an object of the present disclosure is to provide a ferritic heat-resistant steel which contains W and B in large amounts and which has high tensile strength and toughness.

Means for Solving the Problem

In order to solve the above-mentioned problems, the present inventors have conducted a detailed investigation on ferritic heat-resistant steels containing from 2.5% to 3.5% W and from 0.006% to 0.016% B. As a result, the following findings became evident.

As a result of a comparative investigation of steels having a difference in tensile strength and toughness, it was found that in steels having sufficient performance in tensile strength and toughness, $M_{23}C_6$-type carbide that contains W was finely and densely dispersed in grain boundaries and within grains. In contrast, steels in which the precipitation amount of $M_{23}C_6$-type carbide that contains W was small, or, conversely, steels in which the carbide precipitated in a large amount, or steels in which the precipitate precipitated coarsely and sparsely, showed poor performance.

From this, it was inferred that mechanical properties such as tensile strength and toughness were not stable as described in (1) and (2) below. (1) W in steel dissolves as a solid solution in the steel, or is finely dispersed and precipitated as $M_{23}C_6$-type carbide that contains W during a tempering heat treatment in the production of a ferritic heat-resistant steel, and thereby contributes to tensile strength. However, in a case in which $M_{23}C_6$-type carbide that contains W precipitates sparsely and in a small amount, the required tensile strength cannot be obtained due to the precipitation strengthening effect not being sufficient. Conversely, in a case in which the $M_{23}C_6$-type carbide that contains W precipitates coarsely, the carbide does not contribute to enhancement of tensile strength, and at the same time, the required tensile strength cannot be obtained due to strengthening effect provided by a solid solution of W in the steel also being reduced.

(2) Further, the fact that W precipitates as $M_{23}C_6$-type carbide in the tempering heat treatment facilitates the recovery and softening of the structure. However, in a case in which the $M_{23}C_6$-type carbide that contains W precipitates in a small amount, sufficient toughness cannot be obtained due to the effect of advancing the recovery and softening being small. Conversely, in a case in which the $M_{23}C_6$-type carbide that contains W precipitates coarsely, the required toughness cannot be obtained due to the initiation of fracture increasing.

As a result of various studies, it has been found that it is possible to obtain stable performance in terms of tensile strength and toughness by controlling the amount of W, analyzed as the electrolytically extracted residue, within a predetermined range, depending on the amount of B contained in a steel.

The reasons for this are thought to be (3) and (4) below. (3) As described above, W precipitates as $M_{23}C_6$-type carbide in the tempering heat treatment, and contributes to an improvement in tensile strength. B has the effect of allowing the carbide to disperse finely and densely, without affecting the amount of precipitation, by replacing C in the $M_{23}C_6$-type carbide to dissolve as a solid solution in the carbide. This enables the strengthening effect due to precipitation of the carbide to be obtained, and the required tensile strength to be easily obtained even with a small amount of precipitation of the carbide. Further, conversely, even in a case in which the carbide precipitates in a large amount, the size of the carbide is small, and the strengthening effect due to precipitation of the carbide is maintained, and thereby sufficient tensile strength can be easily obtained.

(4) In addition, B has the effect of reducing the size of the precipitate, without affecting the amount of precipitation of the carbide. As a result, the recovery and softening of the structure are facilitated, and the precipitate is less likely to be the initiation of fracture, and thereby the required toughness is easily obtained.

Furthermore, the present inventors have conducted a detailed investigation on the effects of Ta and Nb on high-temperature strength, that is, the creep strength of the above-mentioned ferritic heat-resistant steel containing W and B. As a result, findings (5) and (6) described below became evident.

(5) As a result of comparing steels having a difference in creep strength at the initial stage of use at a high temperature, it was found that steel having excellent strength had a large amount of fine carbonitride containing Ta and Nb, and further, a proportion of Ta contained in the carbonitride was low.

(6) Further, as a result of comparing steels having a difference in creep strength when used for a long period of time, it was found that fine carbonitrides containing Ta and Nb were finely and densely formed and precipates thereof were present in steel having excellent strength. Further, a proportion of Nb contained in the carbonitrides was low.

From the above results, the mechanism of action of Ta and Nb on high temperature strength (in particular, high temperature strength at the initial stage of use and high temperature strength when used for a long period of time) was inferred as described in (7) and (8) below.

(7) Although Ta and Nb are finely precipitated as carbonitride in the heat treatment process during steel production and in the initial stage of use, which contributes to strength, in a case in which Ta, which has a slow diffusion rate, is contained in a large amount with respect to Nb in steel, the start of precipitation thereof is delayed and a sufficient amount of precipitation cannot be obtained. As a result, high temperature strength at the initial stage of use decreases.

(8) In contrast, although carbonitride containing Ta and Nb contributes to creep strength when used for a long period of time, when Nb having a fast diffusion rate is contained in a large amount with respect to Ta in steel, the carbonitride grows faster and coarsens at an early stage. As a result, it was inferred that the strengthening effect of these precipitates disappeared at an early stage, such that the creep strength at a high temperature when used for a long period of time decreased.

Therefore, as a result of dedicated research, the following finding (9) was obtained.

(9) By controlling the ratio of Ta and Nb contained in steel within an appropriate range, it is possible to secure the amount of fine carbonitride at the initial stage of use and delay coarsening of carbonitride when used for a long period of time, and it is possible to obtain more stable high-temperature strength at the initial stage of use and at a high temperature when used for a long period of time.

The present disclosure has been completed based on the above findings, and the gist thereof is the ferritic heat-resistant steel described below.

<1> A ferritic heat-resistant steel including, by mass:

from 0.06% to 0.11% of C;
from 0.15% to 0.35% of Si;
from 0.35% to 0.65% of Mn;
0.020% or less of P;

0.0030% or less of S;
from 0.005% to 0.250% of Ni;
from 0.005% to 0.250% of Cu;
from 2.7% to 3.3% of Co;
from 8.3% to 9.7% of Cr;
from 2.5% to 3.5% of W;
from 0.15% to 0.25% of V;
from 0.030% to 0.080% of Nb;
from 0.002% to 0.040% of Ta;
from 0.010% to 0.060% of Nd;
from 0.006% to 0.016% of B;
from 0.005% to 0.015% of N;
0.020% or less of Al; and
0.020% or less of O,

with a balance consisting of Fe and impurities,
in which an amount of W, which is analyzed as an electrolytically extracted residue, satisfies the following Formula (1):

$$-10 \times [\%B] + 0.26 \leq [\%W]_{ER} \leq 10 \times [\%B] + 0.54 \quad \text{Formula(1)}$$

wherein, in Formula (1), $[\%W]_{ER}$ represents an amount of W, which is analyzed as an electrolytically extracted residue, in % by mass, and $[\%B]$ represents a content of B, in % by mass, that is contained in the ferritic heat-resistant steel.

<2> The ferritic heat-resistant steel according to <1>, in which:

by mass, a total content of Ta and Nb is from 0.040% to 0.110%, and
a ratio Ta/Nb of a content of Ta to a content of Nb is from 0.10 to 0.70.

<3> The ferritic heat-resistant steel according to <1> or <2>, further including, by mass, at least one selected from the group consisting of:

0.50% or less of Mo;
0.20% or less of Ti;
0.015% or less of Ca;
0.015% or less of Mg; and
0.005% or less of Sn,
instead of a part of Fe.

<4> The ferritic heat-resistant steel according to any one of <1> to <3>, in which a tensile strength at room temperature, as defined in JIS Z2241: 2011, is 620 MPa or more, and a full-size Charpy absorbed energy at 20 °C, as defined in JIS Z2242: 2005, is 27 J or more.

Effect of the Invention

According to the present disclosure, it is possible to stably obtain excellent tensile strength and toughness in a ferritic heat-resistant steel containing a large amount of W and B.

MODE FOR CARRYING OUT THE INVENTION

In the present disclosure, the reasons for limiting the composition of the ferritic heat-resistant steel are as follows.
In the following explanation, the description "%" used to describe the content of each element means the content thereof in "% by mass". Further, in the present disclosure, a numerical range that is expressed by using "to" means a range including the numerical values described before and after "to" as a lower limit value and an upper limit value, unless otherwise defined.
In numerical ranges that are described in a stepwise manner in the present disclosure, the upper limit value or the lower limit value in one numerical range that is described in a stepwise manner may be replaced with the upper limit value or the lower limit value of another numerical range that is described in a stepwise manner, or may be replaced with values shown in the examples.

The definition of the term "step" in the present disclosure includes not only an independent step, but also a step which is not clearly distinguishable from another step, as long as the intended purpose of the step is achieved.

C: from 0.06% to 0.11%

C is effective for obtaining a martensite structure, in addition to forming fine carbide or carbonitride and contributing to an improvement in tensile strength and creep strength. In the range of content of W and B in the present disclosure, it is necessary for C to be contained at 0.06% or more in order to sufficiently obtain these effects. However, since including an excessive amount of C instead causes a decrease in creep strength and toughness, the content of C is set to 0.11% or less. The lower limit of the content of C is preferably 0.07%, and the upper limit thereof is preferably 0.10%. The lower limit of the content of C is more preferably 0.08%, and the upper limit thereof is more preferably 0.09%.

Si: from 0.15% to 0.35%

Si is contained as a deoxidizing agent, but is also an element that is effective for improving steam oxidation resistance (that is, resistance to oxidation by water vapor). It is necessary for Si to be contained at 0.15% or more in order to sufficiently obtain this effect. However, including an excessive amount of Si causes a decrease in ductility. Therefore, the content of Si is set to 0.35% or less. The lower limit of the content of Si is preferably 0.18%, and the upper limit thereof is preferably 0.32%. The lower limit of the content of Si is more preferably 0.20%, and the upper limit thereof is more preferably 0.30%.

Mn: from 0.35% to 0.65%

Mn is contained as a deoxidizing agent, as is the case with Si, but is also effective for obtaining a martensite structure. It is necessary for Mi to be contained at 0.35% or more in order to sufficiently obtain this effect. However, since including an excessive amount of Mn causes creep embrittlement, the content of Mn is set to 0.65% or less. The lower limit of the content of Mn is preferably 0.38%, and the upper limit thereof is preferably 0.62%. The lower limit of the content of Mn is more preferably 0.40%, and the upper limit thereof is more preferably 0.60%.

P: 0.020% or less

Including an excessive amount of P causes a decrease in creep ductility. Therefore, it is necessary for the content of P to be 0.020% or less. The content of P is preferably 0.018% or less, and more preferably 0.015% or less. It should be noted that the lower the content of P, the better. However, an extreme reduction in the content of P causes an extreme increase in material costs. Therefore, the lower limit of the content of P is preferably 0.0005%, and more preferably 0.001%.

S: 0.0030% or less

As is the case with P, including an excessive amount of S causes a decrease in creep ductility. Therefore, it is necessary for the content of S to be 0.0030% or less. The content of S is preferably 0.0025% or less, and more preferably 0.0020% or less. It should be noted that the lower the content of S, the better. However, an extreme reduction in the content of S causes an extreme increase in production costs. Therefore, the lower limit of the content of S is desirably 0.0002%, and more preferably 0.0004%.

Ni: from 0.005% to 0.250%

Ni is an element that is effective for obtaining a martensite structure. It is necessary for Ni to be contained at 0.005% or more in order to obtain this effect. However, in the present disclosure in which the content of Co is in the following range, including Ni in excess of 0.250%, results in saturation of the effect, and causes an increase in costs due to Ni being an expensive element. Therefore, the upper limit of the content of Ni is set to 0.250%. The lower limit of the content of Ni is preferably 0.020%, and the upper limit thereof is preferably 0.200%. The lower limit of the content of Ni is more preferably 0.050%, and the upper limit thereof is more preferably 0.150%.

Cu: from 0.005% to 0.250%

Cu is an element that is effective for obtaining a martensite structure, as is the case with Ni. It is necessary for Cu to be contained at 0.005% or more in order to obtain the effect. However, in the present disclosure in which the content of Co is in the following range, the upper limit of the content of Cu is set to 0.250% since including Cu in excess of 0.250% results in saturation of the effect. The preferable lower limit of the content of Cu is 0.020%, and the preferable upper limit thereof is 0.200%. The lower limit of the content of Cu is more preferably 0.050%, and the upper limit thereof is more preferably 0.150%.

Co: from 2.7% to 3.3%

Co is an element that is effective for obtaining a martensite structure and ensuring creep strength. It is necessary for Co to be contained at 2.7% or more in order to sufficiently obtain this effect. However, Co is an extremely expensive element, and including an excessive amount of Co causes an increase in material costs and instead causes a decrease in creep strength and creep ductility. Therefore, the content of Co is set to 3.3% or less. The lower limit of the content of Co is preferably 2.8%, and the upper limit thereof is preferably 3.2%. The lower limit of the content of Co is more preferably 2.9%, and the upper limit thereof is more preferably 3.1%.

Cr: from 8.3% to 9.7%

Cr is an element that is effective for ensuring steam oxidation resistance at a high temperature and corrosion resistance. Further, Cr precipitates as carbide, and also contributes to an improvement in creep strength. It is necessary for Cr to be contained at 8.3% or more in order to sufficiently obtain these effects. However, including an excessive amount of Cr causes a decrease in stability of the carbide, and instead decreases creep strength. Therefore, the content of Cr is set to 9.7% or less. The lower limit of the content of Cr is preferably 8.5%, and the upper limit thereof is preferably 9.5%. The lower limit of the content of Cr is more preferably 8.7%, and the upper limit thereof is more preferably 9.3%.

W: from 2.5% to 3.5%

W dissolves as a solid solution in the matrix or precipitates as $M_{23}C_6$-type carbide, and contributes to ensuring tensile strength, in addition to precipitating as an intermetallic compound and contributing to ensuring creep strength at a high temperature during use for a long period of time. It is necessary for W to be contained at 2.5% or more in order to obtain the effect. However, including an excessive amount of W results in saturation of the effect of increasing creep strength, and causes an increase in material costs since W is an expensive element. Therefore, the content of W is set to 3.5% or less. The lower limit of the content of W is preferably 2.6%, and the upper limit thereof is preferably 3.3%. The lower limit of the content of W is more preferably 2.8%, and the upper limit thereof is more preferably 3.1%.
It should be noted that the content of W as used herein means the total amount of W contained in the ferritic heat-resistant steel. In other words, the content of W means the total of the amount of W dissolved as a solid solution in the matrix and the amount of W present as a precipitate.
Further, in the present disclosure, in addition to satisfying the above-described range of the content of W, it is necessary for the amount of W that is present as a precipitate, that is, the amount of W analyzed as the electrolytically extracted residue, to satisfy the relationship with the amount of B, as will be described later.

V: from 0.15% to 0.25%

V precipitates within the grains as fine carbonitride, and contributes to an improvement in creep strength. It is necessary for V to be contained at 0.15% or more in order to sufficiently obtain this effect. However, if the content of V is excessive, the carbonitride precipitates coarsely and in a large amount, and instead causes a decrease in creep strength and creep ductility. Therefore, the content of V is set to 0.25% or less. The lower limit of the content of V is preferably 0.16%, and the upper limit thereof is preferably 0.24%. The lower limit of the content of V is more preferably 0.18%, and the upper limit thereof is more preferably 0.22%.

Nb: from 0.030% to 0.080%

Nb precipitates within the grains as fine carbonitride, and contributes to an improvement in creep strength. It is necessary for Nb to be contained at 0.030% or more in order to sufficiently obtain the effect. However, if the content of Nb is excessive, the carbonitride precipitates coarsely and in a large amount, and instead causes a decrease in creep strength and creep ductility. Therefore, the content of Nb is set to 0.080% or less. The lower limit of the content of Nb is preferably 0.035%, and the upper limit thereof is preferably 0.075%. The lower limit of the content of Nb is more preferably 0.040%, and the upper limit thereof is more preferably 0.070%.

Ta: from 0.002% to 0.040%

As is the case with Nb, Ta precipitates within the grains as fine carbonitride, and contributes to an improvement in creep strength. It is necessary for Ta to be contained at 0.002% or more in order to obtain the effect. However, if the content of Ta is excessive, the carbonitride precipitates coarsely and in a large amount, and instead causes a decrease in creep strength and creep ductility. Therefore, the content of Ta is set to 0.040% or less. The lower limit of the content of Ta is preferably 0.003%, and the upper limit thereof is preferably 0.035%. The lower limit of the content of Ta is more preferably 0.004%, and the upper limit thereof is more preferably 0.030%.

Total content of Nb and Ta: from 0.040% to 0.110%

Nb and Ta precipitate within the grains as fine carbonitride, and contribute to an improvement in creep strength. In order to sufficiently obtain this effect, it is preferable that a total of 0.040% or more of Nb and Ta is contained. However, if the content of Nb and Ta is excessive, Nb and Ta carbonitrides precipitate coarsely and in a large amount, and instead causes a decrease in creep strength and creep ductility. Therefore, it is preferable to set the upper limit of the total content of Nb and Ta to 0.110%. The lower limit of the total content of Nb and Ta is more preferably 0.050%, and the upper limit thereof is more preferably 0.100%. The lower limit of the total content is more preferably 0.060%, and the upper limit thereof is more preferably 0.090%.

Ratio of Ta/Nb of content of Ta to content of Nb: from 0.10 to 0.70

As described above, Nb and Ta precipitate within the grains as fine carbonitride, and contribute to an improvement in creep strength. However, if the content ratio Ta/Nb of the content of Ta and Nb is small, there are cases in which the growth of the carbonitride becomes faster during use for a long period of time, the precipitation strengthening effect thereof disappears at an early stage, and stable creep strength cannot be sufficiently obtained when used for a long period of time. On the other hand, if the content ratio Ta/Nb of the content of Ta and Nb is large, there are cases in which the start of precipitation of the carbonitride is delayed at the initial stage of use, and sufficient high-temperature strength cannot be obtained. Therefore, it is preferable to set the content ratio Ta/Nb of the content of Ta and Nb to from 0.10 to 0.70. A more preferable range of the content ratio Ta/Nb of the content of Ta and Nb is from 0.12 to 0.68, and an even more preferable range thereof is 0.15 to 0.65.

Nd: from 0.010% to 0.060%

Nd binds to S and P, removes the adverse effects thereof, and improves creep ductility. It is necessary for Nd to be contained at 0.010% or more in order to sufficiently obtain this effect. However, if an excessive amount of Nd is included, Nd binds with oxygen to cause a decrease in cleanliness and cause a deterioration in hot workability. Therefore, the content of Nd is set to 0.060% or less. The lower limit of the content of Nd is preferably 0.015%, and the upper limit thereof is preferably 0.055%. The lower limit of the content of Nd is more preferably 0.020%, and the upper limit thereof is more preferably 0.050%.

B: from 0.006% to 0.016%

B is effective for obtaining a martensite structure. In addition, B has the effect of dissolving in $M_{23}C_6$-type carbide, to allow the carbide to finely disperse, and thereby contributes to ensuring tensile strength and toughness. Further, B also contributes to an improvement in creep strength. It is necessary for B to be contained at 0.006% or more in order to obtain the effects. However, if an excessive amount of B is included, B mixes into a weld metal during welding, resulting in an increased solidification crack susceptibility; therefore, the upper limit of the content of B is set to 0.016%. The lower limit of the content of B is preferably 0.007%, and the upper limit thereof is preferably 0.014%. The lower limit of the content of B is more preferably 0.008%, and the upper limit thereof is preferably 0.012%.

It should be noted that, in the present disclosure, it is necessary for the amount of W present as a precipitate, that is, the amount of W analyzed as the electrolytically extracted residue, to satisfy a predetermined relationship with the content of B, as will be described later.

N: from 0.005% to 0.015%

N binds to Nb and Ta during use at a high temperature and precipitates within the grains as fine carbonitride, and therefore contributes to an improvement in creep strength. It is necessary for N to be contained at 0.005% or more in order to obtain this effect. However, including an excessive amount of N leads to coarsening of the carbonitride, and instead causes a decrease in creep ductility; therefore, the content of N is set to 0.015% or less. The lower limit of the content of N is preferably 0.006%, and the upper limit thereof is preferably 0.014%. The lower limit of the content of N is more preferably 0.008%, and the upper limit thereof is more preferably 0.012%.

Al: 0.020% or less

Although Al is contained as a deoxidizing agent, including a large amount of Al significantly impairs cleanliness, resulting in deterioration in workability. Further, including a large amount of Al is not preferable from the viewpoint of creep strength. Therefore, the content of Al is set to 0.020% or less. The content of Al is preferably 0.018% or less, and more preferably 0.015% or less. It should be noted that it is not necessary to set a lower limit of the content of Al. However, since an extreme decrease in the content of Al causes an increase in production costs, the content of Al is preferably set to 0.001% or more.

O: 0.020% or less

O is present as an impurity, and causes a decrease in workability in a case of being contained in a large amount. Therefore, the content of O is set to 0.020% or less. The content of O is preferably 0.015% or less, and more preferably 0.010% or less. It should be noted that it is not necessary to set a lower limit of the content of O, in particular. However, since an extreme decrease in the content of O causes an increase in production costs, the content of O is preferably set to 0.001% or more.

Balance: Consists of Fe and impurities

The ferritic heat-resistant steel according to the present disclosure includes each of the above-mentioned elements, and a balance consists of Fe and impurities.
It should be noted that "impurities" are so-called unavoidably mixed-in components that are mixed in due to various factors in the production process, including raw materials such as ore or scrap, when steel materials are industrially produced, and refers to components that are not intentionally added.
Further, the ferritic heat-resistant steel according to the present disclosure may contain at least one element belonging to the following group instead of a part of the Fe in the balance. The reasons for the limitation will be described below.
Group Mo: 0.50% or less

Ti: 0.20% or less
Ca: 0.015% or less
Mg: 0.015% or less
Sn: 0.005% or less

Mo: 0.50% or less

Mo may be included since, as is the case with W, Mo dissolves as a solid solution in the matrix, and contributes to ensuring creep strength at a high temperature. However, including an excessive amount of Mo results in saturation of the effect, and causes an increase in material costs since Mo is an expensive element; therefore the content of Mo is set to 0.50% or less. The upper limit of the content of Mo is preferably 0.40%, and more preferably 0.20% or less. A lower limit in a case in which Mo is contained is preferably 0.01%, and the lower limit thereof is more preferably 0.02%.

Ti: 0.20% or less

Ti may be contained as necessary since, as is the case with Nb and Ta, Ti precipitates within the grains as fine carbonitride during use at a high temperature, and contributes to an improvement in creep strength. However, if the content of Ti is excessive, the carbonitride precipitates coarsely and in a large amount, and causes a decrease in creep strength and creep ductility; therefore the content of Ti is set to 0.20% or less. The upper limit of the content of Ti is preferably 0.15%, and more preferably 0.10% or less. A lower limit in a case in which Ti is contained is preferably 0.01%, and the lower limit thereof is more preferably 0.02%.

Ca: 0.015% or less

Ca may be contained as necessary since Ca has the effect of improving hot workability in the production process. However, including an excessive amount of Ca causes Ca to bind to oxygen and significantly decreases cleanliness, and instead results in deterioration in hot workability; therefore, the content of Ca is set to 0.015% or less. The content of Ca is preferably 0.012% or less, and more preferably 0.010% or less. A lower limit in a case in which Ca is contained is preferably 0.0005%, and the lower limit thereof is more preferably 0.001%.

Mg: 0.015% or less

As is the case with Ca, Mg may be contained as necessary, since Mg has the effect of improving the hot workability in the production process. However, including an excessive amount of Mg causes Mg to bind to oxygen and significantly decreases cleanliness, and instead results in deterioration in hot workability; therefore, the content of Mg is set to 0.015% or less. The content of Mg is preferably 0.012% or less, and more preferably 0.010% or less. A lower limit in a case in which Mg is contained is preferably 0.0005%, and the lower limit thereof is more preferably 0.001%.

Sn: 0.005% or less

Sn may be contained as necessary, since Sn is concentrated under the scales on the surface of the steel and has the effect of improving corrosion resistance. However, since including an excessive amount of Sn causes a decrease in toughness, the content of Sn is set to 0.005% or less. The content of Sn is preferably 0.004% or less, and more preferably 0.003% or less. A lower limit in a case in which Sn is contained is preferably 0.0005%, and the lower limit thereof is more preferably 0.0010%.

Amount of W Analyzed as Electrolytically Extracted Residue ($[\%W]_{ER}$):

$$-10 \times [\%B] + 0.26 \leq [\%W]_{ER} \leq 10 \times [\%B] + 0.54$$

W contained in the ferritic heat-resistant steel precipitates in the form contained in the $M_{23}C_6$-type carbide during the tempering heat treatment in the production process. When precipitated finely, this carbide contributes to ensuring tensile strength. However, on the other hand, if this carbide is precipitated excessively, toughness decreases. The amount of this carbide can be estimated as the amount of W analyzed as the electrolytically extracted residue.

When the amount of the $M_{23}C_6$-type carbide which contains W is small, a strengthening effect due to precipitation of the carbide is small, and in addition to not being able to obtain the required tensile strength, recovery and softening of the structure do not proceed and toughness also decreases. On the other hand, if this carbide is excessively and coarsely precipitated, the carbide does not contribute to the enhancement of tensile strength and the like, and the amount of W that is dissolved as a solid solution in the matrix of the steel is reduced, and a solid solution strengthening effect is also reduced. As a result, the required tensile strength cannot be obtained, and the carbide becomes the initiation of fracture, and toughness also decreases.

Further, B contained in the steel has the effect of allowing the $M_{23}C_6$-type carbide to precipitate finely, without affecting the amount of precipitation of the above-described carbide. Therefore, it is easy to obtain the strengthening effect due to precipitation of the carbide even with a small amount of precipitation, and at the same time, B is capable of reducing the size of precipitates (that is, making the precipitates fine), to prevent the disappearance of the strengthening effect due to precipitation and prevent a decrease in toughness due to the carbide being the initiation of fracture. Therefore, in order to obtain the required tensile strength and toughness, it is necessary for the lower limit and the upper limit of the amount of W present as the precipitation, namely, the amount of W analyzed as electrolytically extracted residue ($[\%W]_{ER}$), to be set in a relationship so as to satisfy the following Formula (1), depending on the content of B in the steel.

$$-10 \times [\%B] + 0.26 \leq [\%W]_{ER} \leq 10 \times [\%B] + 0.54 \quad \text{Formula (1)}$$

In Formula (1), $[\%W]_{ER}$ represents the amount (% by mass) of W analyzed as electrolytically extracted residue, and [% B] represents the content (% by mass) of B in the ferritic heat-resistant steel.

The amount of W analyzed as the electrolytically extracted residue can be adjusted according to the amounts of W and C contained in the steel, in addition to the conditions of the tempering heat treatment and the like. Specifically, the higher the amount of W and the higher the amount of C which are contained in the steel, the larger the amount of W analyzed as the electrolytically extracted residue. Further, in the tempering heat treatment applied to the steel of the present disclosure, the higher the temperature and the longer the time, the larger the amount of W analyzed as the electrolytically extracted residue. Further, in the cooling after the tempering treatment, the lower the cooling rate, the larger the amount of W analyzed as the electrolytically extracted residue.

The amount of W analyzed as the electrolytically extracted residue is measured as follows.

A test material of a predetermined size is collected from the ferritic heat-resistant steel. Anodic dissolution of the test material is carried out at a current density of 20 mA/cm$^2$, by galvanostatic electrolysis method using a 10% by volume acetylacetone-1% by mass tetramethyl ammonium chloride-methanol solution, as an electrolytic solution, and carbide is extracted as a residue. After acid decomposition of the extracted residue, ICP (Inductively Coupled Plasma) optical emission spectrometry is carried out to measure the mass of W in the residue. The mass of W in the residue is divided by the amount of dissolution of the test material, to determine the amount of W present as carbide. That is, the thus determined amount of W is the amount of W analyzed as the electrolytically extracted residue.

Characteristics of the Ferritic Heat-Resistant Steel

(1) Tensile Strength

The ferritic heat-resistant steel according to the present disclosure preferably has a tensile strength at room temperature of 620 MPa or more, and more preferably 670 MPa or more.

The tensile strength is measured at room temperature (from 10 °C to 35 °C) in accordance with JIS Z2241: 2011 using a No. 14A round-bar test specimen in which a parallel portion diameter is 8 mm and a parallel portion length is 55 mm.

(2) Full-size Charpy Absorbed Energy

The ferritic heat-resistant steel according to the present disclosure preferably has a full-size Charpy absorbed energy at 20 °C of 27J or more.

The full-size Charpy absorbed energy is measured at 20 °C in accordance with JIS Z2242: 2005 and using a full-size Charpy impact test specimen with a 2 mm V-notch.

(3) Creep Performance

A creep rupture test is carried out on the ferritic heat-resistant steel according to the present disclosure under the conditions of a temperature of 650 °C and a pressure of 157 MPa, in which a target rupture time of the base metal is 1,000 hours, and it is preferable that the rupture time exceeds the target rupture time.

The creep rupture test is carried out using a round-bar creep test specimen in accordance with JIS Z2271: 2010.

Next, a method for producing the ferritic heat-resistant steel according to the present disclosure will be described with reference to an example.

Forming Step

In the production of the ferritic heat-resistant steel according to the present disclosure, first, a raw material is formed into a final shape of the ferritic heat-resistant steel. The forming step includes all the processes involving the deformation of the steel material into a final shape, such as casting, forging, rolling, and the like.

One example of the forming step may be, for example, a step in which an ingot that is obtained by melting and casting the raw material is subjected to hot forging and hot rolling, or alternatively, subjected to hot forging, hot rolling and cold working, and is formed into a final shape of the ferritic heat-resistant steel.

Normalizing Heat Treatment Step

After the forming step, for example, a normalizing heat treatment may be carried out. For example, it is preferable that the normalizing heat treatment is carried out under the conditions of a temperature of from 1,130 °C to 1,170 °C, and a period of time from 0.1 to 1.5 hours.

Tempering Heat Treatment Step

Further, after the normalizing heat treatment step, for example, a tempering heat treatment may be carried out. For example, it is preferable that the tempering heat treatment is carried out under the conditions of a temperature of from 770 °C to 790 °C, and a period of time from 1 to 5 hours.

Applications

The ferritic heat-resistant steel according to the present disclosure is used, for example, in equipment used at a high temperature, such as a boiler for power generation.
Examples of equipment used at a high temperature include: boiler pipes for use in coal-fired power generation plants, oil-fired power generation plants, waste incineration power plants, biomass power generation plants, and the like; and cracking tubes for use in petrochemical plants.
Here, the expression "used at a high temperature" in the present disclosure includes, for example, an embodiment in which the steel is used in an environment of from 350 °C to 700 °C (further, from 400 °C to 650 °C).

EXAMPLES

Hereinafter, the present disclosure will be described in more specific detail with reference to Examples. However, the present disclosure is not limited to these Examples.

Example 1

Ingots which were prepared by melting and casting raw materials A to I, each having a chemical composition shown in Table 1-1 and Table 1-2, in a laboratory, were subjected to hot forging and hot rolling, in this order, and formed at a thickness of 15 mm. The resulting raw materials were processed into plate materials each having a length of 150 mm and a width of 150 mm. In Table 1-1 and Table 1-2, the unit of each component except for "Ratio Ta/Nb" is % by mass, and the balance is Fe and impurities. In addition, the underlined values in the tables below indicate values that are outside the scope of the present disclosure.

[Table 1-1]

| Symbol | C | Si | Mn | P | S | Ni | Cu | Co | Cr | W | V | Nb | Ta |
|--------|------|------|------|-------|--------|-------|-------|-----|-----|-----|------|-------|-------|
| A | 0.11 | 0.25 | 0.62 | 0.018 | 0.0012 | 0.011 | 0.018 | 3.0 | 9.6 | 3.4 | 0.16 | 0.034 | 0.006 |
| B | 0.10 | 0.35 | 0.38 | 0.015 | 0.0020 | 0.150 | 0.010 | 2.8 | 9.0 | 2.9 | 0.18 | 0.045 | 0.012 |
| C | 0.06 | 0.31 | 0.40 | 0.016 | 0.0008 | 0.020 | 0.050 | 3.1 | 8.8 | 2.5 | 0.20 | 0.039 | 0.004 |
| D | 0.07 | 0.20 | 0.52 | 0.014 | 0.0025 | 0.051 | 0.022 | 3.3 | 8.7 | 3.0 | 0.21 | 0.050 | 0.023 |
| E | 0.08 | 0.18 | 0.38 | 0.020 | 0.0010 | 0.085 | 0.142 | 3.2 | 9.3 | 3.2 | 0.20 | 0.052 | 0.016 |
| F | 0.06 | 0.22 | 0.35 | 0.018 | 0.0012 | 0.015 | 0.032 | 2.9 | 8.4 | <u>2.1</u> | 0.16 | 0.033 | 0.008 |
| G | <u>0.13</u> | 0.15 | 0.55 | 0.016 | 0.0022 | 0.225 | 0.189 | 3.1 | 9.7 | <u>3.7</u> | 0.15 | 0.033 | 0.008 |
| H | <u>0.04</u> | 0.32 | 0.45 | 0.015 | 0.0018 | 0.023 | 0.015 | 2.8 | 8.3 | <u>2.3</u> | 0.16 | 0.034 | 0.010 |
| I | 0.11 | 0.31 | 0.39 | 0.017 | 0.0015 | 0.240 | 0.020 | 3.0 | 9.6 | <u>3.9</u> | 0.15 | 0.032 | 0.009 |

[Table 1-2]

| Symbol | Nd | B | N | Al | O | Others | Ta + Nb | Ratio Ta/Nb |
|--------|-------|-------|-------|-------|-------|-------------------|---------|-------------|
| A | 0.012 | 0.009 | 0.012 | 0.008 | 0.006 | Mo: 0.03 | 0.040 | 0.18 |
| B | 0.023 | 0.010 | 0.008 | 0.010 | 0.009 | | 0.057 | 0.27 |
| C | 0.049 | 0.009 | 0.010 | 0.009 | 0.008 | Ca: 0.002 | 0.043 | 0.10 |
| D | 0.021 | 0.013 | 0.011 | 0.010 | 0.010 | | 0.073 | 0.46 |
| E | 0.032 | 0.010 | 0.009 | 0.011 | 0.009 | Mg: 0.001, Ti: 0.03 | 0.068 | 0.31 |
| F | 0.025 | 0.007 | 0.012 | 0.013 | 0.012 | | 0.041 | 0.24 |
| G | 0.033 | 0.012 | 0.009 | 0.012 | 0.012 | | 0.041 | 0.24 |
| H | 0.026 | 0.006 | 0.015 | 0.012 | 0.010 | Ca: 0.002 | 0.044 | 0.29 |

(continued)

| Symbol | Nd | B | N | Al | O | Others | Ta + Nb | Ratio Ta/Nb |
|---|---|---|---|---|---|---|---|---|
| I | 0.022 | 0.009 | 0.009 | 0.010 | 0.008 | | 0.041 | 0.28 |

The thus obtained plate materials were subjected to normalizing and tempering heat treatments as shown in Table 2, to prepare test materials.

Measurement of Amount of W Analyzed as Electrolytically Extracted Residue

From each of the resulting test materials, a test specimen having a size of 8 mm square and a length of 40 mm was collected, and the amount of W analyzed as the electrolytically extracted residue was measured by the method described in the above described-embodiment, namely, by galvanostatic electrolysis method. Specifically, anodic dissolution of the test material was carried out at a current density of 20 mA/cm$^2$, by galvanostatic electrolysis method using a 10% by volume acetylacetone-1% by mass tetramethyl ammonium chloride-methanol solution, as an electrolytic solution, and carbides were extracted as a residue. After the acid decomposition of the extracted residue, ICP (high frequency inductively coupled plasma) emission spectrometry was carried out to measure the mass of W in the residue. The mass of W in the residue was divided by the amount of dissolution of the test material, to determine the amount of W present as carbide, for each test material.

[Table 2]

| Symbol of Steel Plate | Raw Material Used | Amount of B % by mass | Normalizing Heat Treatment | | Tempering Heat Treatment | | Amount of W Analyzed as Electrolytically Extracted Residue (% by mass) | Left Side of Formula (1) -10 × [%B] + 0.26 | Right Side of Formula (1) 10 × [%B] + 0.54 |
|---|---|---|---|---|---|---|---|---|---|
| | | | Temperature (°C) | Time (hours) | Temperature (°C) | Time (hours) | | | |
| A1 | A | 0.009 | 1150 | 0.5 | 780 | 1 | 0.42 | 0.17 | 0.63 |
| A2 | A | 0.009 | 1150 | 0.5 | 780 | 2 | 0.44 | 0.17 | 0.63 |
| A3 | A | 0.009 | 1150 | 0.5 | 780 | 3 | 0.47 | 0.17 | 0.63 |
| A4 | A | 0.009 | 1150 | 0.5 | 760 | 3 | 0.42 | 0.17 | 0.63 |
| A5 | A | 0.009 | 1150 | 0.5 | 790 | 3 | 0.59 | 0.17 | 0.63 |
| A6 | A | 0.009 | 1150 | 0.5 | 780 | 4 | 0.49 | 0.17 | 0.63 |
| A7 | A | 0.009 | 1150 | 0.5 | 780 | 5 | 0.51 | 0.17 | 0.63 |
| A8 | A | 0.009 | 1150 | 0.5 | 780 | 0.1 | 0.16 | 0.17 | 0.63 |
| A9 | A | 0.009 | 1150 | 0.5 | 780 | 0.5 | 0.20 | 0.17 | 0.63 |
| A10 | A | 0.009 | 1150 | 0.5 | 780 | 7 | 0.60 | 0.17 | 0.63 |
| A11 | A | 0.009 | 1150 | 0.5 | 780 | 10 | 0.64 | 0.17 | 0.63 |
| B1 | B | 0.010 | 1150 | 0.5 | 780 | 1 | 0.38 | 0.16 | 0.64 |
| B2 | B | 0.010 | 1150 | 0.5 | 780 | 2 | 0.39 | 0.16 | 0.64 |
| B3 | B | 0.010 | 1150 | 0.5 | 780 | 3 | 0.41 | 0.16 | 0.64 |
| B4 | B | 0.010 | 1150 | 0.5 | 760 | 3 | 0.35 | 0.16 | 0.64 |
| B5 | B | 0.010 | 1150 | 0.5 | 790 | 3 | 0.42 | 0.16 | 0.64 |
| B6 | B | 0.010 | 1150 | 0.5 | 780 | 4 | 0.44 | 0.16 | 0.64 |
| B7 | B | 0.010 | 1150 | 0.5 | 780 | 5 | 0.46 | 0.16 | 0.64 |
| B8 | B | 0.010 | 1150 | 0.5 | 780 | 0.1 | 0.15 | 0.16 | 0.64 |
| B9 | B | 0.010 | 1150 | 0.5 | 780 | 0.5 | 0.19 | 0.16 | 0.64 |
| B10 | B | 0.010 | 1150 | 0.5 | 780 | 7 | 0.59 | 0.16 | 0.64 |
| B11 | B | 0.010 | 1150 | 0.5 | 780 | 10 | 0.65 | 0.16 | 0.64 |
| C1 | C | 0.009 | 1150 | 0.5 | 780 | 1 | 0.19 | 0.17 | 0.63 |

(continued)

| Symbol of Steel Plate | Raw Material Used | Amount of B % by mass | Normalizing Heat Treatment | | Tempering Heat Treatment | | Amount of W Analyzed as Electrolytically Extracted Residue (% by mass) | Left Side of Formula (1) -10 × [%B] + 0.26 | Right Side of Formula (1) 10 × [%B] + 0.54 |
|---|---|---|---|---|---|---|---|---|---|
| | | | Temperature (°C) | Time (hours) | Temperature (°C) | Time (hours) | | | |
| C2 | C | 0.009 | 1150 | 0.5 | 780 | 2 | 0.25 | 0.17 | 0.63 |
| C3 | C | 0.009 | 1150 | 0.5 | 780 | 3 | 0.26 | 0.17 | 0.63 |
| C4 | C | 0.009 | 1150 | 0.5 | 780 | 4 | 0.31 | 0.17 | 0.63 |
| C5 | C | 0.009 | 1150 | 0.5 | 780 | 5 | 0.40 | 0.17 | 0.63 |
| D1 | D | 0.013 | 1150 | 0.5 | 780 | 1 | 0.34 | 0.13 | 0.67 |
| E1 | E | 0.010 | 1150 | 0.5 | 780 | 1 | 0.40 | 0.16 | 0.64 |
| F1 | F | 0.007 | 1150 | 0.5 | 780 | 1 | 0.18 | 0.19 | 0.61 |
| G1 | G | 0.012 | 1150 | 0.5 | 780 | 1 | 0.67 | 0.14 | 0.66 |
| H1 | H | 0.006 | 1150 | 0.5 | 780 | 1 | 0.10 | 0.20 | 0.60 |
| I1 | I | 0.009 | 1150 | 0.5 | 780 | 1 | 0.65 | 0.17 | 0.63 |

Tensile Test/Tensile Strength

Further, a No. 14A round-bar test specimen in which the parallel portion diameter was 8 mm and the length of the parallel portion length is 55 mm, and which was defined in JIS Z2241: 2011, was collected from each test material, and subjected to a tensile test at room temperature (from 10 °C to 35 °C) in accordance with JIS Z2241:2011. The test materials having a tensile strength of 620 MPa or more, which is the tensile strength required for a base metal, were evaluated as "Pass", and among these, those having a tensile strength of 670 MPa or more were evaluated as "Pass/excellent", and the test materials other than those were evaluated as "Pass/acceptable". On the other hand, test materials having a tensile strength below 620 MPa were evaluated as "Fail".

Charpy Impact Test/Toughness

Three pieces of V-notch full-size Charpy impact test specimens provided with a 2 mm notch were collected from the central portion in a plate thickness direction of each test material, and subjected to a Charpy impact test. The Charpy impact test was carried out in accordance with JIS Z2242: 2005. The test was carried out at 20 °C, and the test materials in each of which the mean value of the absorbed energy of the three pieces of test specimens was 27 J or more were evaluated as "Pass". Among these, the test materials in each of which the three pieces of test specimens each had an absorbed energy of 27 J or more were evaluated as "Pass/excellent", and the test materials other than those were evaluated as "Pass/acceptable". On the other hand, the test materials in each of which the mean value of the absorbed energy of the three pieces of test specimens was below 27 J were evaluated as "Fail".

Creep Rupture Test

In addition, from each of the test materials which passed the tensile test and the Charpy impact test, a round-bar creep test specimen was collected, and subjected to a creep rupture test. As the evaluation of creep strength when used for a long period of time, the creep rupture test was carried out under the conditions of a temperature of 650 °C and a pressure of 157 MPa, in which a target rupture time of the base metal was 1,000 hours. The creep rupture test was carried out in accordance with JIS Z2271: 2010. The test materials with a rupture time exceeding the target rupture time were evaluated as "Pass", and those with a rupture time below the target rupture time were evaluated as "Fail".

[Table 3]

| Symbol of Steel Plate | (Tensile Strength) Tensile test | (Impact Strength) Charpy Impact Test | Creep Rupture Test |
|---|---|---|---|
| A1 | Pass/Excellent | Pass/Excellent | Pass |
| A2 | Pass/Excellent | Pass/Excellent | Pass |
| A3 | Pass/Excellent | Pass/Excellent | Pass |
| A4 | Pass/Excellent | Pass/Excellent | Pass |
| A5 | Pass/Excellent | Pass/Excellent | Pass |
| A6 | Pass/Excellent | Pass/Excellent | Pass |
| A7 | Pass/Excellent | Pass/Excellent | Pass |
| A8 | Fail | Fail | Not performed |
| A9 | Pass/Excellent | Pass/Excellent | Pass |
| A10 | Pass/Acceptable | Pass/Acceptable | Pass |
| A11 | Fail | Fail | Not performed |
| B1 | Pass/Excellent | Pass/Excellent | Pass |
| B2 | Pass/Excellent | Pass/Excellent | Pass |
| B3 | Pass/Excellent | Pass/Excellent | Pass |
| B4 | Pass/Excellent | Pass/Excellent | Pass |
| B5 | Pass/Excellent | Pass/Excellent | Pass |
| B6 | Pass/Excellent | Pass/Excellent | Pass |

(continued)

| Symbol of Steel Plate | (Tensile Strength) Tensile test | (Impact Strength) Charpy Impact Test | Creep Rupture Test |
|---|---|---|---|
| B7 | Pass/Excellent | Pass/Excellent | Pass |
| B8 | Fail | Fail | Not performed |
| B9 | Pass/Excellent | Pass/Excellent | Pass |
| B10 | Pass/Excellent | Pass/Acceptable | Pass |
| B11 | Fail | Fail | Not performed |
| C1 | Pass/Excellent | Pass/Excellent | Pass |
| C2 | Pass/Excellent | Pass/Excellent | Pass |
| C3 | Pass/Excellent | Pass/Excellent | Pass |
| C4 | Pass/Excellent | Pass/Excellent | Pass |
| C5 | Pass/Excellent | Pass/Excellent | Pass |
| D1 | Pass/Excellent | Pass/Excellent | Pass |
| E1 | Pass/Excellent | Pass/Excellent | Pass |
| F1 | Fail | Fail | Not performed |
| G1 | Fail | Fail | Not performed |
| H1 | Fail | Fail | Not performed |
| I1 | Fail | Fail | Not performed |

From Table 3, it can be seen that excellent tensile strength and high toughness can be stably obtained from the steels satisfying the requirements defined in the present disclosure. In addition, it can be seen that these steels also have a high creep strength when used for a long period of time.

In contrast, in each of the test materials of symbols A8, B8, F1, and H1, the amount of W analyzed as the electrolytically extracted residue was below the range defined by Formula (1), that is, the amount of precipitation of carbide was not sufficient, and thus the target tensile strength and toughness were not satisfied.

In each of the test materials of symbols A11, B11, G1, and I1, the amount of W analyzed as the electrolytically extracted residue exceeded the range defined by Formula (1), that is, the carbide precipitated excessively and coarsely, and thus the target tensile strength and toughness were not satisfied.

Example 2

Ingots which were prepared by melting and casting raw materials J to O, each having a chemical composition shown in Table 4-1 and Table 4-2, in a laboratory, were subjected to hot forging and hot rolling, in this order, and formed to a thickness of 15 mm. The resulting raw materials were processed into plate materials each having a length of 150 mm and a width of 150 mm. In Table 4-1 and Table 4-2, the unit of each component except for "Ratio Ta/Nb" is % by mass, and the balance is Fe and impurities.

[Table 4-1]

| Symbol | C | Si | Mn | P | S | Ni | Cu | Co | Cr | W | V | Nb | Ta |
|---|---|---|---|---|---|---|---|---|---|---|---|---|---|
| J | 0.09 | 0.23 | 0.54 | 0.017 | 0.0010 | 0.034 | 0.025 | 2.9 | 9.4 | 3.0 | 0.22 | 0.035 | 0.007 |
| K | 0.10 | 0.28 | 0.60 | 0.015 | 0.0015 | 0.040 | 0.018 | 3.0 | 9.2 | 3.2 | 0.19 | 0.068 | 0.015 |
| L | 0.07 | 0.25 | 0.55 | 0.016 | 0.0012 | 0.028 | 0.020 | 2.7 | 9.0 | 2.7 | 0.16 | 0.032 | 0.007 |
| M | 0.06 | 0.26 | 0.61 | 0.017 | 0.0011 | 0.030 | 0.020 | 2.8 | 9.1 | 2.6 | 0.17 | 0.077 | 0.035 |
| N | 0.07 | 0.25 | 0.58 | 0.018 | 0.0009 | 0.035 | 0.024 | 2.9 | 9.3 | 2.6 | 0.18 | 0.044 | 0.004 |
| O | 0.07 | 0.25 | 0.63 | 0.017 | 0.0015 | 0.027 | 0.026 | 2.7 | 9.2 | 2.7 | 0.16 | 0.036 | 0.026 |

[Table 4-2]

| Symbol | Nd | B | N | Al | O | Others | Ta + Nb | Ratio Ta/Nb |
|---|---|---|---|---|---|---|---|---|
| J | 0.018 | 0.010 | 0.010 | 0.009 | 0.008 | | 0.042 | 0.20 |
| K | 0.020 | 0.009 | 0.009 | 0.008 | 0.008 | Sn: 0.004 | 0.083 | 0.22 |
| L | 0.032 | 0.007 | 0.012 | 0.010 | 0.009 | | 0.039 | 0.22 |
| M | 0.025 | 0.007 | 0.014 | 0.008 | 0.008 | | 0.112 | 0.45 |
| N | 0.028 | 0.006 | 0.013 | 0.012 | 0.010 | | 0.048 | 0.09 |
| O | 0.021 | 0.006 | 0.013 | 0.012 | 0.002 | | 0.062 | 0.72 |

The thus obtained plate materials were subjected to a normalizing heat treatment of heating at 1,150 °C for 0.5 hours and cooling, and a tempering heat treatment of heating at 780 °C for 1 hour and cooling, to prepare test materials.

Measurement of Amount of W Analyzed as Electrolytically Extracted Residue

Tensile Test/Tensile Strength
Charpy Impact Test/Toughness
Each of the thus obtained test materials was subjected to measurement of the amount of W analyzed as the electrolytically extracted residue, the tensile test and the Charpy impact test, as described above.

Creep Rupture Test

In addition, from each of the test materials which passed the tensile test and the Charpy impact test, a round-bar creep test specimen was collected, and subjected to a creep rupture test. Then, as an evaluation of the high temperature strength at the initial stage of use, the creep rupture test was carried out under the conditions of 650 °C and a pressure of 206 MPa in which a target rupture time of the base metal was 50 hours, for each of the three pieces of test specimens, and as an evaluation of creep strength when used for a long period of time, the creep rupture test was carried out under the conditions of a temperature of 650 °C and a pressure of 157 MPa, in which a target rupture time of the base metal was 1,000 hours, for each of the three pieces of test specimens. It should be noted that the creep rupture test was carried out in accordance with JIS Z2271: 2010.

Cases in which a rupture time of all three pieces of test specimens exceeded the target rupture time were evaluated as "Pass (excellent)", cases in which a rupture time of two of the three pieces of test specimens exceeded the target rupture time and a rupture time of the remaining one piece of test specimen was below the target rupture time but 90% or more of the target rupture time were evaluated as "Pass (acceptable)", and anything else was evaluated as "Fail".

[Table 5]

| Symbol of Steel Plate | Raw Material Used | Amount of B % by mass | Normalizing Heat Treatment | | Tempering Heat Treatment | | Amount of W Analyzed as Electrolytically Extracted Residue (% by mass) | Left Side of Formula (1) -10 × [%B] + 0.26 | Right Side of Formula (1) 10 × [%B] + 0.54 |
|---|---|---|---|---|---|---|---|---|---|
| | | | Temperature (°C) | Time (hours) | Temperature (°C) | Time (hours) | | | |
| J1 | J | 0.010 | 1150 | 0.5 | 780 | 1 | 0.39 | 0.16 | 0.64 |
| K1 | K | 0.009 | 1150 | 0.5 | 780 | 1 | 0.41 | 0.17 | 0.63 |
| L1 | L | 0.007 | 1150 | 0.5 | 780 | 1 | 0.23 | 0.19 | 0.61 |
| M1 | M | 0.007 | 1150 | 0.5 | 780 | 1 | 0.21 | 0.19 | 0.61 |
| N1 | N | 0.006 | 1150 | 0.5 | 780 | 1 | 0.22 | 0.20 | 0.60 |
| O1 | O | 0.006 | 1150 | 0.5 | 780 | 1 | 0.24 | 0.20 | 0.60 |

[Table 6]

| Symbol of Steel Plate | (Tensile Strength) Tensile test | (Impact Strength) Charpy Impact Test | Creep Rupture Test | |
|---|---|---|---|---|
| | | | 650 °C × 206 MPa | 650 °C × 157 MPa |
| J1 | Pass/Excellent | Pass/Excellent | Pass/Excellent | Pass/Excellent |
| K1 | Pass/Excellent | Pass/Excellent | Pass/Excellent | Pass/Excellent |
| L1 | Pass/Excellent | Pass/Excellent | Pass/Acceptable | Pass/Acceptable |
| M1 | Pass/Excellent | Pass/Excellent | Pass/Excellent | Pass/Acceptable |
| N1 | Pass/Excellent | Pass/Excellent | Pass/Excellent | Pass/Acceptable |
| O1 | Pass/Excellent | Pass/Excellent | Pass/Acceptable | Pass/Excellent |

From Table 5 and Table 6, it can be seen that excellent tensile strength and high toughness can be stably obtained due to steels J to O satisfying the requirements defined in the present invention. In addition, it can be seen that in a case in which Ta and Nb satisfy a predetermined range, it is easy to stably obtain a high creep strength at an initial stage of use and when used for a long period of time.

In this manner, it can be understood that it is possible to obtain a ferritic heat-resistant steel which stably provides an excellent tensile strength and toughness, and which also provides a high creep strength when used for a long period of time, only in a case in which the requirements of the present disclosure are satisfied.

Industrial Applicability

According to the present disclosure, it is possible to provide a ferritic heat-resistant steel which contains W and B in large amounts, and which stably provides an excellent tensile strength and toughness.

The disclosures of Japanese Patent Application No. 2019-075661, which was filed on April 11, 2019, and Japanese Patent Application No. 2019-051751 and Japanese Patent Application No. 2019-051752, which were filed on March 19, 2019, are incorporated herein by reference in their entirety. All documents, patent applications, and technical standards described herein are incorporated by reference herein to the same extent as if the individual documents, patent applications, and technical standards were specifically and individually described.

**Claims**

1.   A ferritic heat-resistant steel comprising, by mass:

from 0.06% to 0.11% of C;
from 0.15% to 0.35% of Si;
from 0.35% to 0.65% of Mn;
0.020% or less of P;
0.0030% or less of S;
from 0.005% to 0.250% of Ni;
from 0.005% to 0.250% of Cu;
from 2.7% to 3.3% of Co;
from 8.3% to 9.7% of Cr;
from 2.5% to 3.5% of W;
from 0.15% to 0.25% of V;
from 0.030% to 0.080% of Nb;
from 0.002% to 0.040% of Ta;
from 0.010% to 0.060% of Nd;
from 0.006% to 0.016% of B;

from 0.005% to 0.015% of N;
0.020% or less of Al; and
0.020% or less of O,

with a balance consisting of Fe and impurities,
wherein an amount of W, which is analyzed as an electrolytically extracted residue, satisfies the following Formula (1):

$$-10 \times [\%B] + 0.26 \leq [\%W]_{ER} \leq 10 \times [\%B] + 0.54 \quad \text{Formula (1)}$$

wherein, in Formula (1), $[\%W]_{ER}$ represents an amount of W, which is analyzed as an electrolytically extracted residue, in % by mass, and $[\%B]$ represents a content of B, in % by mass, that is contained in the ferritic heat-resistant steel.

2. The ferritic heat-resistant steel according to claim 1, wherein:

by mass, a total content of Ta and Nb is from 0.040% to 0.110%, and
a ratio Ta/Nb of a content of Ta to a content of Nb is from 0.10 to 0.70.

3. The ferritic heat-resistant steel according to claim 1 or claim 2, further comprising, by mass, at least one selected from the group consisting of:

0.50% or less of Mo;
0.20% or less of Ti;
0.015% or less of Ca;
0.015% or less of Mg; and
0.005% or less of Sn,
instead of a part of Fe.

4. The ferritic heat-resistant steel according to any one of claims 1 to 3, wherein a tensile strength at room temperature, as defined in JIS Z2241: 2011, is 620 MPa or more, and a full-size Charpy absorbed energy at 20 °C, as defined in JIS Z2242: 2005, is 27 J or more.

## INTERNATIONAL SEARCH REPORT

International application No.

PCT/JP2020/012528

**A. CLASSIFICATION OF SUBJECT MATTER**
C22C 38/00(2006.01)i; C22C 38/54(2006.01)i; C21D 6/00(2006.01)n
FI: C22C38/00 302Z; C22C38/54; C21D6/00 101K
According to International Patent Classification (IPC) or to both national classification and IPC

**B. FIELDS SEARCHED**

Minimum documentation searched (classification system followed by classification symbols)
C22C38/00-38/60; C21D6/00

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2016-216815 A (NIPPON STEEL & SUMITOMO METAL CORPORATION) 22.12.2016 (2016-12-22) | 1–4 |
| A | JP 2002-363709 A (SUMITOMO METAL INDUSTRIES, LTD.) 18.12.2002 (2002-12-18) | 1–4 |
| A | JP 2002-241903 A (SUMITOMO METAL INDUSTRIES, LTD.) 28.08.2002 (2002-08-28) | 1–4 |
| A | WO 2017/104815 A1 (NIPPON STEEL & SUMITOMO METAL CORPORATION) 22.06.2017 (2017-06-22) | 1–4 |

☐ Further documents are listed in the continuation of Box C.　　☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 June 2020 (05.06.2020) | 16 June 2020 (16.06.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

INTERNATIONAL SEARCH REPORT

Information on patent family members

International application no.

PCT/JP2020/012528

| Patent Documents referred in the Report | Publication Date | Patent Family | Publication Date |
|---|---|---|---|
| JP 2016-216815 A | 22 Dec. 2016 | (Family: none) | |
| JP 2002-363709 A | 18 Dec. 2002 | (Family: none) | |
| JP 2002-241903 A | 28 Aug. 2002 | (Family: none) | |
| WO 2017/104815 A1 | 22 Jun. 2017 | US 2018/0354059 A1<br>EP 3391989 A1<br>CN 108367396 A<br>KR 10-2018-0095639 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002241903 A
- JP 2002363709 A
- JP 2016216815 A
- JP 2004300532 A
- JP 2001192781 A
- JP 2009293063 A
- JP 2016022501 A
- WO 2017104815 A
- JP 2019075661 A
- JP 2019051751 A
- JP 2019051752 A